# EUROPEAN PATENT APPLICATION

(11) **EP 2 592 843 A1**
(43) Date of publication of application: **15.05.2013**
(21) Application number: 12171503.1
(22) Date of filing: 11.06.2012
(51) Int. Cl.: H04N 21/4402, H04N 21/2662

(54) **Method and apparatus for receiving and transmitting broadcast signals**

(30) Priority: 08.11.2011 KR 20110115625
(71) Applicant: Samsung Electronics Co., Ltd., Suwon-si, Gyeonggi-do, 443-742 (KR)
(72) Inventor: Kweon, Yong-jae, Suwon-si Gyeonggi-do (KR); Choi, Hyeon-jin, Suwon-si Gyeonggi-do (KR)
(74) Representative: Taor, Simon Edward William

(57) **Abstract**

A broadcasting transmitting/receiving apparatus and a control method thereof are disclosed. The broadcasting transmitting/receiving apparatus includes: a signal receiving unit which receives a digital TV signal; a first signal processing unit which acquires video and/or audio from the received digital TV signal; a second signal processing unit which generates an analog TV signal which includes the acquired video and/or audio; an antenna unit which transmits the generated analog TV signal; and a controller which controls the first and second signal processing units to transmit the analog TV signal which corresponds to the digital TV signal selected from among a plurality of channels. With this configuration, it is possible for a user to view a digital TV broadcasting on an existing analog TV at minimal additional cost.

## Description

Exemplary embodiments of the present invention relate to a broadcasting transmitting/receiving apparatus which receives receiving broadcast signals such as TV signals and outputs video and/or audio.

With recent activity in digital broadcasting, the recent trend is to transition from existing analog TV broadcasting to digital TV broadcasting. Therefore, existing analog TVs, which cannot receive and process digital TV signals, experience difficulty in being used with digital TV broadcasting environments.

As an alternative, the existing analog TVs may continue to be used with the help of an additional digital converter which converts digital TV signals into analog TV signals, which may incur costs for the digital converter.

Accordingly, one or more exemplary embodiments provide a broadcasting transmitting/receiving apparatus which allows a user to watch digital TV broadcasting with an existing analog TV, at minimal cost.

The foregoing and/or other aspects may be achieved by providing a broadcasting transmitting/receiving apparatus including a signal receiving unit which receives a digital TV signal; a first signal processing unit which acquires video and/or audio from the received digital TV signal; a second signal processing unit which generates an analog TV signal to include the acquired video and/or audio; an antenna unit which transmits the generated analog TV signal; and a controller which controls the first and second signal processing units to transmit the analog TV signal which corresponds to the digital TV signal of one channel selected from among a plurality of channels.

The controller may determine one idle channel of the plurality of channels and may control the first signal processing unit to generate the analog TV signal of the determined idle channel.

The controller may control the first signal processing unit to perform a channel scan and may determine the idle channel based on a result of the channel scan.

The controller may determine the idle channel according to an instruction received from a user.

The controller may control the antenna unit to adjust the intensity of the transmitted analog TV signal according to an instruction received from a user.

The broadcasting transmitting/receiving apparatus may further include a communication unit which communicates with a mobile device for receiving an instruction from a user, and the controller may select a channel of the digital TV signal according to the instruction received from the user.

The foregoing and/or other aspects may be achieved by providing a control method for a broadcasting transmitting/receiving apparatus, including receiving a digital TV signal selected from a plurality of channels; acquiring video and/or audio from the received digital TV signal; generating an analog TV signal to include the acquired video and/or audio; and transmitting the generated analog TV signal via an antenna unit.

The generating an analog TV signal may include: determining one idle channel from among the plurality of channels; and generating an analog TV signal of the determined idle channel.

The determining one idle channel from the plurality of channels may include: performing a channel scan; and determining the idle channel based on a result of the channel scan.

The determining one idle channel from the plurality of channels may include receiving an instruction from a user; and determining the idle channel according to the instruction received from the user.

The control method may further include: receiving an instruction from a user; and adjusting the intensity of the transmitted analog TV signal according to the instruction received from the user.

The control method may further include receiving a user instruction from a mobile device, the receiving a user instruction may include receiving the digital TV signal of a channel selected according to the user instruction.

As described above, according to an exemplary embodiment of the present inventive concept, a broadcasting transmitting/receiving apparatus such as a digital TV can be used to allow a user to view, on an analog TV, a digital TV broadcast.

An exemplary embodiment of the inventive concept may further include a broadcasting transmitting/receiving apparatus including a first signal processing unit which acquires video and/or audio from a received digital TV signal; a second signal processing unit which generates an analog TV signal which includes the acquired video and/or audio, and a controller which controls the first and second signal processing units to transmit the analog TV signal to an analog TV.

A further exemplary embodiment may include a control method of a broadcasting transmitting/receiving apparatus, the control method including receiving a digital TV signal selected from among a plurality of channels; acquiring video and/or audio from the received digital TV signal; generating an analog TV signal which includes the acquired video and/or audio; and transmitting the generated analog TV signal to an analog TV.

The above and/or other aspects will become apparent and more readily appreciated from the following description of the exemplary embodiments, taken in conjunction with the accompanying drawings, in which:
FIG. 1 is a block diagram showing a broadcasting transmitting/receiving apparatus according to an exemplary embodiment of the present invention.
FIG. 2 is a block diagram showing one example of the configuration of the broadcasting transmitting/receiving apparatus shown in FIG. 1.
FIG. 3 is a block diagram showing one example of the configuration of a second signal processing unit shown in FIG. 2.
FIG. 4 is a flow chart showing one example of a control method of the broadcasting transmitting/receiving apparatus shown in FIG. 1.
FIG. 5 is a flow chart showing another example of the control method of the broadcasting transmitting/receiving apparatus shown in FIG. 1.
FIG. 6 is a block diagram showing another example of the configuration of the broadcasting transmitting/receiving apparatus shown in FIG. 1.

Below, exemplary embodiments will be described in detail with reference to accompanying drawings so as to be easily understood by a person having ordinary skill in the art.

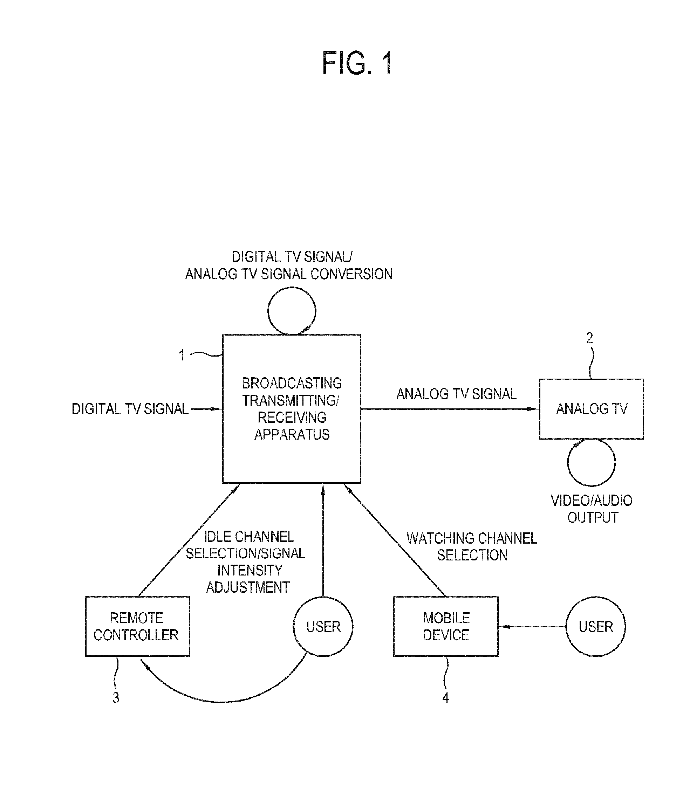

FIG. 1 shows a broadcasting transmitting/receiving apparatus according to an exemplary embodiment of the present inventive concept. As shown in FIG. 1, a broadcasting transmitting/receiving apparatus 1 may be implemented as a digital TV or a digital TV set-top box capable of receiving and processing digital TV signals. The broadcasting transmitting/receiving apparatus 1 receives the digital TV signals and then converts the received digital TV signals into analog TV signals. The broadcasting transmitting/receiving apparatus 1 transmits the analog TV signals in the form of a radio wave. An analog TV 2 may receive and process the analog TV signals in the form of the radio wave. The analog TV 2 receives and processes the analog TV signals transmitted from the broadcasting transmitting/receiving apparatus 1 and outputs video and audio. This allows a user to watch digital TV broadcasting with the analog TV 2.

A channel of the analog TV signals transmitted from the broadcasting transmitting/receiving apparatus 1 may be selected from among idle channels which are being unused. The channel selection from the idle channels may be performed by the user through a remote controller 3, or the like. Intensity of the analog TV signals transmitted from the broadcasting transmitting/receiving apparatus 1 may be adjusted so that the analog TV 2 can receive the analog TV signals. The channel of the digital TV signals received from the broadcasting transmitting/receiving apparatus 1 may basically be selected by the user through the remote controller 3, or the like. Further, the channel of the digital TV signals received from the broadcasting transmitting/receiving apparatus 1 may be selected by the user through a mobile device 44 such as a smart phone, or the like.

Thus, the broadcasting transmitting/receiving apparatus 1 such as a digital TV can be used to allow the user to watch digital TV broadcasting with the existing analog TV 2, thereby increasing the usability of the existing analog TV 2.

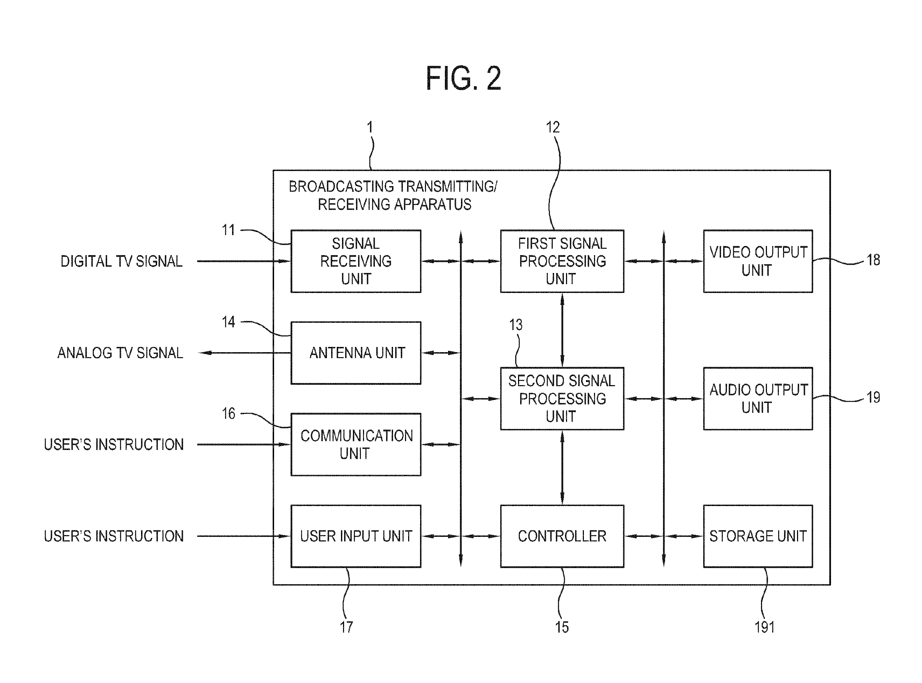

FIG. 2 is a block diagram showing configuration of the broadcasting transmitting/receiving apparatus 1 shown in FIG. 1. As shown in FIG. 2, the broadcasting transmitting/receiving apparatus 1 includes a signal receiving unit 11, a first signal processing unit 12, a second signal processing unit 13, an antenna unit 14, a video output unit 18, an audio output unit 19 and a controller 15.

The signal receiving unit 11 receives a digital TV signal of one selected from among a plurality of channels. Examples of the digital TV signal received by the signal receiving unit 11 may include, but is not limited to, a radio wave broadcasting signal, a cable broadcasting signal, a satellite broadcasting signal and an Internet broadcasting signal. The channel of the digital TV signal received by the signal receiving unit 11 is determined by the controller 15. The broadcasting transmitting/receiving apparatus 1 further includes a user input unit 17 which receives an instruction from a user and the controller 15 may determine the channel of the received digital TV signal according to the user instruction input through the user input unit 17. The user input unit 17 may be implemented with an operation panel having buttons and so on which are provided in a body of the broadcasting transmitting/receiving apparatus 1, or a remote controller signal receiving unit which receives a remote controller signal from the remote controller 3 (see FIG. 1). As an alternative, the controller 15 may determine the channel of the received digital TV signal according to a user instruction input through the mobile device 4 (see FIG. 1). For example, in response to the user wanting to change a channel while watching the analog TV 2 (see FIG. 1), the user may select a desired channel using the mobile device 4 instead of the remote controller 3. This may be useful, for example, when it is hard for the user to use the remote controller 3 of the broadcasting transmitting/receiving apparatus 1. The broadcasting transmitting/receiving apparatus 1 may further include a communication unit 16 which communicates with the mobile device 4 to receive an instruction from the user.

The first signal processing unit 12 acquires video and/or audio loaded on the digital TV signal received by the signal receiving unit 11. The first signal processing unit 12 may perform demodulation, decoding and so on, in order to acquire the video and/or audio from the digital TV signal.

The video and audio acquired by the first signal processing unit 12 may be output by the video output unit 18 and the audio output unit 19, respectively. In response to the broadcasting transmitting/receiving apparatus 1 being implemented with a TV, the video output unit 18 may further include a display unit for displaying the video. In response to the broadcasting transmitting/receiving apparatus 1 being implemented with a set-top box, the video output unit 18 may transmit a video signal carrying the video to a TV (not shown). The audio output unit 19 may include a speaker for outputting the audio or transmit an audio signal carrying the audio to an audio device (not shown), such as an amplifier.

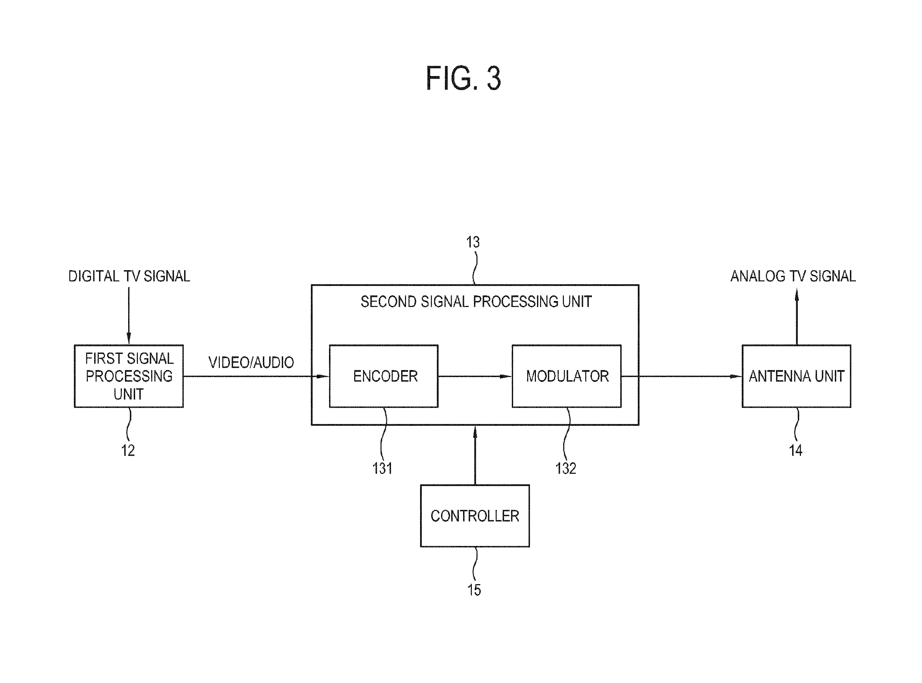

The second signal processing unit 13 generates an analog TV signal carrying the video and audio acquired by the first signal processing unit 12. FIG. 3 is a block diagram showing a configuration of the second signal processing unit 13. The second signal processing unit 13 may include an encoder 131 and a modulator 132. The encoder 131 performs encoding for generating an intermediate signal including the video and audio acquired by the first signal processing unit 12. The encoding used to generate the intermediate signal is not particularly limited but may be any encoding as long as the analog TV 2 can perform decoding to acquire the video and audio at a later time. The modulator 131 modulates the intermediate signal encoded by the encoder 131 to generate the analog TV signal. The modulation performed by the modulator 131 is not particularly limited but may be any modulation as long as the analog TV 2 can perform demodulation to acquire the video and audio. The modulator 131 generates an analog TV signal of a predetermined idle channel selected by a user from among a plurality of channels. The channel of the analog TV signal corresponds to a frequency of the analog TV signal transmitted from the antenna unit 14. The selection of the idle channel of the analog TV signal is determined by the controller 15.

The antenna unit 14 transmits the analog TV signal generated by the second signal processing unit 13 in the form of a radio wave. Intensity of the analog TV signal transmitted by the antenna unit 14 may be adjusted by the controller 15. The controller 15 may adjust the intensity of the analog TV signal transmitted by the antenna unit 14 based on information stored therein. The broadcasting transmitting/receiving apparatus 1 may further include a storage unit 191 which is a nonvolatile memory which stores information relating to the intensity of the analog TV signal. The analog TV signal intensity information stored in the storage unit 191 may be determined in advance in consideration of received sensitivity of the analog TV 2. As an alternative, the controller 15 may adjust the intensity of the broadcast analog TV signal according to an instruction from a user. For example, in response to a channel received from the broadcasting receiving/transmitting apparatus 1 not being properly transmitted while the user is watching the analog TV 2, the controller 15 may adjust the intensity of the analog TV signal transmitted from the broadcasting receiving/transmitting apparatus 1. In this case, the broadcasting receiving/transmitting apparatus 1 may provide a user interface (UI) to allow the user to adjust the intensity of the transmitted analog TV signal.

The controller 15 controls the entire operation of the broadcasting receiving/transmitting apparatus 1. The controller 15 controls the first signal processing unit 12 to receive a digital TV signal of a selected channel according to an instruction from the user. The controller 15 controls the first signal processing unit 12 to acquire the video and audio from the digital TV signal. The controller 15 controls the second signal processing unit 13 to generate an analog TV signal including the acquired video and audio and controls the antenna unit 14 to transmit the generated analog TV signal.

Although not shown, the controller 1 may include a nonvolatile memory in which a control program for such control operations is stored, a volatile memory in which at least a portion of the stored control program is loaded, and a microprocessor for executing the loaded control program.

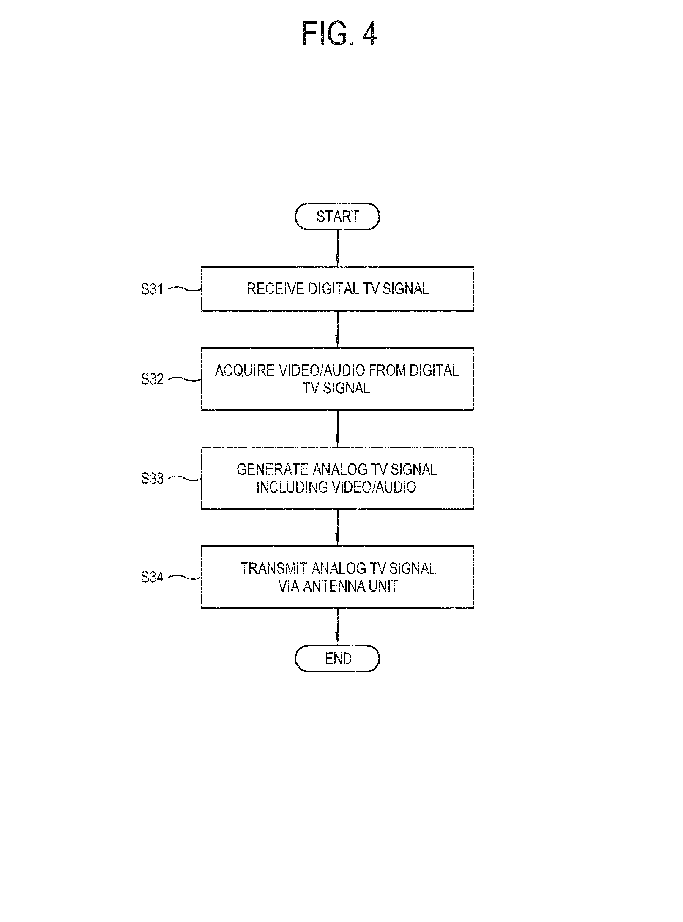

FIG. 4 is a flow chart showing one example of a control method of the broadcasting transmitting/receiving apparatus 1 shown in FIG. 1. In operation S31, the broadcasting transmitting/receiving apparatus 1 receives a digital TV signal of a predetermined one channel selected from a plurality of channels. Next, in operation S32, the broadcasting transmitting/receiving apparatus 1 acquires video and/or audio from the received digital TV signal. In operation S33, the broadcasting transmitting/receiving apparatus 1 generates an analog TV signal including the acquired video and/or audio. Next, in operation S34, the broadcasting transmitting/receiving apparatus 1 transmits the generated analog TV signal via the antenna unit 14.

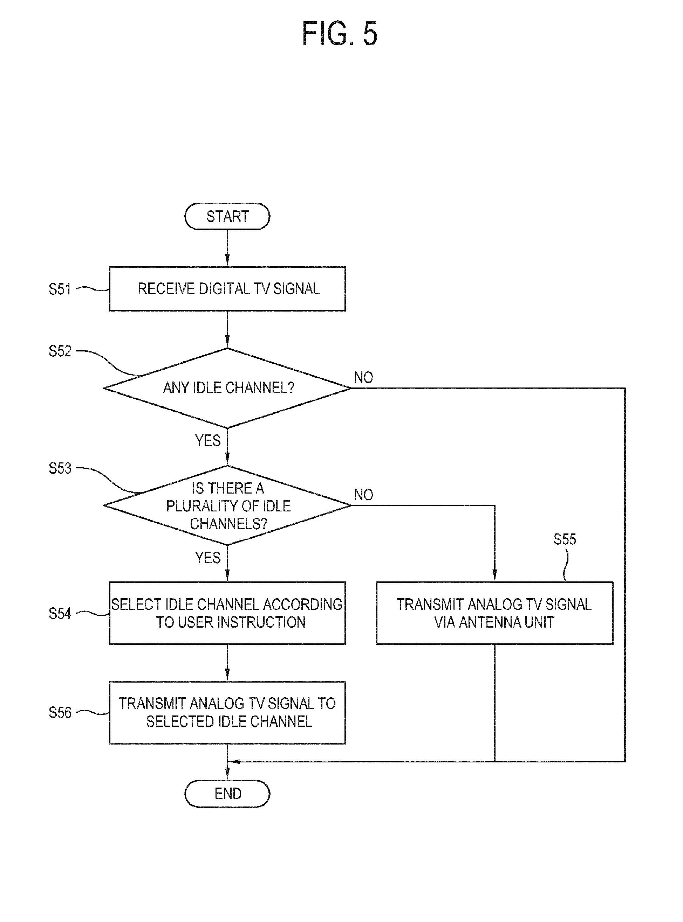

FIG. 5 is a flow chart showing another example of the control method of the broadcasting transmitting/receiving apparatus 1 shown in FIG. 1. In operation S51, the broadcasting transmitting/receiving apparatus 1 receives a digital TV signal of a predetermined one selected from a plurality of channels. Next, in operation S52, the broadcasting transmitting/receiving apparatus 1 converts the received digital TV signal into an analog TV signal and checks whether or not there is any idle channel used for the analog TV signal to be transmitted. In operation S52, the broadcasting transmitting/receiving apparatus 1 may perform a channel scan and determine a current unused channel as an idle channel based on a result of the channel scan.

If there is any idle channel (YES in operation S52), in operation S53, the broadcasting transmitting/receiving apparatus 1 checks whether or not there are a plurality of idle channels. If there is a single idle channel (NO in operation S53), in operation S55, the broadcasting transmitting/receiving apparatus 1 transmits the analog TV signal converted from the digital TV signal to the single idle channel. If there is the plurality of idle channels (YES in operation S53), in operation S54, the broadcasting transmitting/receiving apparatus 1 selects one of the plurality of idle channels according to an instruction from a user. In operation S54, the broadcasting transmitting/receiving apparatus 1 shows the user a list of a plurality of idle channels to allow the user to select one of the plurality of idle channels. Next, in operation S56, the broadcasting transmitting/receiving apparatus 1 transmits the analog TV signal to the selected idle channel.

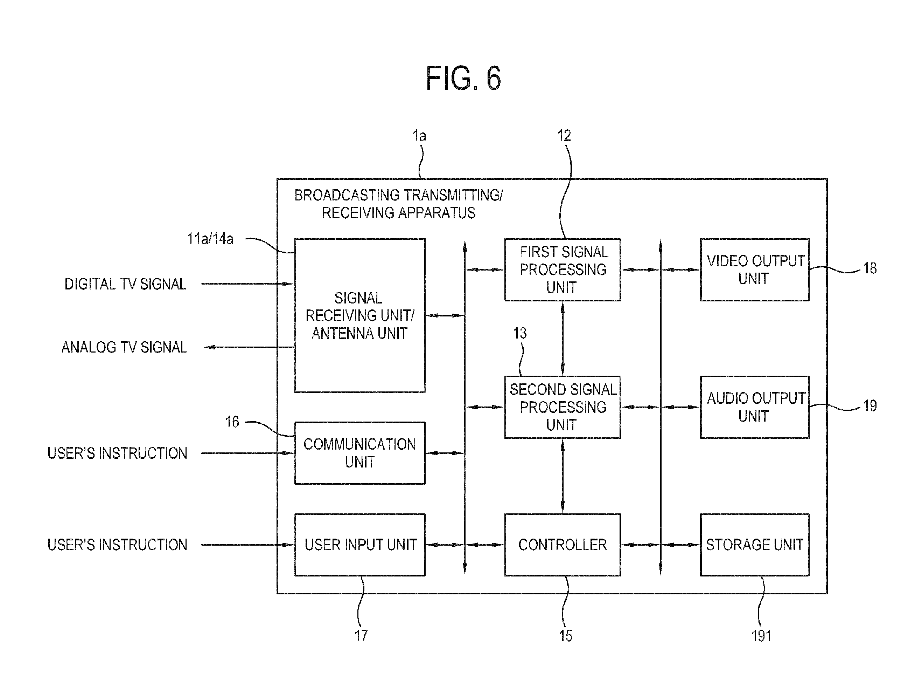

FIG. 6 is a block diagram showing another example of the configuration of the broadcasting transmitting/receiving apparatus according to an exemplary embodiment of the present inventive concept. For a broadcasting transmitting/receiving apparatus 1a shown in FIG. 6, the same or similar elements as the broadcasting transmitting/receiving apparatus 1 shown in FIG. 2 will denoted by the same reference numerals and therefore, explanation of which will not be repeated. The broadcasting transmitting/receiving apparatus 1a includes a signal receiving unit 11a for receiving a digital TV signal and an antenna unit 14 for transmitting an analog TV signal, both of which units are integrated. That is, one antenna is shared for reception of the digital TV signal and transmission of the analog TV signal. For example, this corresponds to a case where the digital TV signal received by the signal receiving unit 11a is a radio wave.

Although a few exemplary embodiments have been shown and described, it will be appreciated by those skilled in the art that changes may be made in these exemplary embodiments without departing from the principles of the invention, the scope of which is defined in the appended claims. For example, in addition to the video and/or audio, the broadcasting transmitting/receiving apparatus may further transmit additional information carried on the transmitted analog TV signal using a vertical blanking interval (VBI). The additional information may be video and/or audio-related information such as, for example, a caption. In a further aspect, the analogue output of the apparatus is not through an antenna, for example, the analogue output is through a wire.

## Claims

1. A broadcasting transmitting/receiving apparatus comprising:
a signal receiving unit which receives a digital TV signal;
a first signal processing unit which acquires video and/or audio from the received digital TV signal;
a second signal processing unit which generates an analog TV signal which includes the acquired video and/or audio;
a unit which transmits the generated analog TV signal; and
a controller which controls the first and second signal processing units to transmit the analog TV signal on a channel which corresponds to a channel of the digital TV signal selected from among a plurality of channels.

2. The broadcasting transmitting/receiving apparatus according to claim 1, wherein the controller determines an idle channel from among the plurality of channels and controls the second signal processing unit to generate the analog TV signal on the determined idle channel.

3. The broadcasting transmitting/receiving apparatus according to claim 2, wherein the controller controls the first signal processing unit to perform a channel scan and determines the idle channel based on a result of the channel scan.

4. The broadcasting transmitting/receiving apparatus according to claim 2,
wherein the controller determines the idle channel according to an instruction received from a user.

5. The broadcasting transmitting/receiving apparatus according to one of claims 1 to 4, wherein the transmission is by an antenna unit and the controller controls the antenna unit to adjust the intensity of the transmitted analog TV signal, according to an instruction received from a user.

6. The broadcasting transmitting/receiving apparatus according to one of claims 1 to 5, further comprising a communication unit which communicates with a mobile device for receiving an instruction from a user,
wherein the controller selects a channel of the digital TV signal according to the instruction received from the user.

7. The broadcasting transmitting/receiving apparatus according to any one of the preceding claims, wherein the unit which transmits the generated analog TV signal is an antenna unit.

8. A control method of a broadcasting transmitting/receiving apparatus, comprising:
receiving a digital TV signal selected from among a plurality of channels;
acquiring video and/or audio from the received digital TV signal;
generating an analog TV signal which includes the acquired video and/or audio; and
transmitting the generated analog TV signal.

9. The control method according to claim 8, wherein the generating an analog TV signal comprises:
determining one idle channel from among the plurality of channels; and
generating the analog TV signal for the determined idle channel.

10. The control method according to claim 9, wherein the determining one idle channel of the plurality of channels comprises:
performing a channel scan; and
determining the idle channel based on a result of the channel scan.

11. The control method according to claim 9, wherein the determining one idle channel from among the plurality of channels comprises:
receiving an instruction from a user; and
determining the idle channel according to the user instruction.

12. The control method according to one of claims 8 to 11, further comprising:
receiving an instruction from a user; and
adjusting the intensity of the transmitted analog TV signal according to the user instruction.

13. The control method according to one of claims 8 to 12, further comprising receiving a user instruction from a mobile device,
wherein the receiving a user instruction comprises receiving the digital TV signal of a channel selected according to the user instruction.

14. The control method according to one of claims 8 to 13 wherein transmitting the generated analog TV signal is via an antenna unit.
